# EUROPEAN PATENT SPECIFICATION

(11) **EP 4 662 590 B1**
(45) Date of publication and mention of the grant of the patent: **19.08.2026**
(21) Application number: 24708249.8
(22) Date of filing: 31.01.2024
(51) Int. Cl.: G06M 11/00, G06V 20/52, G06V 20/59, G06V 40/10, G07C 9/00, G07B 15/00

(54) **METHOD AND DEVICE FOR DETECTING PASSENGERS GETTING ON AND/OR GETTING OFF A PUBLIC MEANS OF TRANSPORTATION**
VERFAHREN UND VORRICHTUNG ZUM ERFASSEN DES EIN- UND/ODER AUSSTIEGS VON PASSAGIEREN AUS EINEM ÖFFENTLICHEN VERKEHRSMITTEL
PROCÉDÉ ET DISPOSITIF DE DÉTECTION DE PASSAGERS MONTANT DANS ET/OU DESCENDANT D'UN MOYEN DE TRANSPORT PUBLIC

(30) Priority: 08.02.2023 IT 202300002127
(43) Date of publication of application: 17.12.2025
(73) Proprietor: HITACHI RAIL STS S.P.A., 80147 Napoli (IT)
(72) Inventor: NARDONE, Davide, 80147 Napoli (IT); LAISO, Ilario, 81031 Aversa (IT); STRIGARO, Carmine, 80147 Napoli (IT); SANNINO, Paolo, 80131 Napoli (IT)
(74) Representative: Metroconsult Srl
(86) International application number: PCT/IB2024/050872
(87) International publication number: WO 2024/165945

(56) References cited:
- EP-A1- 2 801 956
- CN-A- 108 875 562
- SEIDEL ROBERT ET AL: "NAPC: A Neural Algorithm for Automated Passenger Counting in Public Transport on a Privacy-Friendly Dataset", IEEE OPEN JOURNAL OF INTELLIGENT TRANSPORTATION SYSTEMS, IEEE, vol. 3, 30 December 2021 (2021-12-30), pages 33 - 44, XP011898782, DOI: 10.1109/OJITS.2021.3139393

## Description

The present invention relates to a method and a device for detecting passengers getting on and/or getting off a means of transportation, in particular a public means of transportation, where the presence of travelling passengers must be detected for safety reasons and/or for correct application of fare rates.

As is known, public means of transportation such as trains, buses or tram cars are environments where pathogenic agents like flu viruses, the SARS-CoV-2 virus, or the like, can spread easily because passengers very often assemble together, thus facilitating airborne pathogen transmission.

In order to limit this phenomenon, it is necessary to employ personnel (e.g. ticket inspectors, drivers when the means of transportation is not moving, etc.) for checking the crowding condition on public means of transportation, so as to make sure that passengers are adequately spaced apart.

However, this task can also be carried out by automatic systems, such as counting systems that, when the means of transportation opens or closes the doors, take care of counting the passengers getting on/off said means of transportation, thus providing information about how many passengers are currently travelling in said means of transportation or staying in a given portion thereof (e.g. a storey of a railway carriage).

According to the state of the art, for such counting systems to operate, they must be connected to one or more of the on-board safety-critical systems of the means of transportation, so that information acquired and verified by said one or more safety-critical systems, e.g. an open state or a closed state of said door, can be shared. This connection requires the counting system to be also certified as a safety-critical system, thus making very costly (in terms of time and money) the installation of a counting system on a fleet of vehicles already in circulation; it must be pointed out, in fact, that those safety-critical systems to which said counting system is connected will have to be certified again.

European patent application publication No. EP 2 801 956 A1 to GIKEN TRASTEM CO. LTD discloses a passenger counter that uses an imaging unit to capture an image of a vehicle's platform.

Chinese patent application publication No. CN 108 875 562 A to SOUTH CHINA NORMAL UNIVERSITY discloses a method for passenger flow statistics on a bus.

The present invention aims at solving these and other problems by providing a method for detecting passengers getting on and/or getting off a means of transportation as defined in the appended claims.

Furthermore, the present invention aims at solving these and other problems by providing a device for detecting passengers getting on and/or getting off a means of transportation.

The basic idea of the present invention is to determine, via processing means, whether a door of a means of transportation is in a closed state or in an open state on the basis of at least one image comprising at least one portion depicting at least one portion of a door of said means of transportation, and to detect, via detection means (e.g. people counter sensors, or the like) the passage of at least one passenger getting on or getting off said means of transportation when said door is in the open state.

In this manner, passengers can be effectively counted without the counting systems having to be connected to the safety-critical systems of the means of transportation, such as, for example, railway carriages, tram cars, buses, or the like. It will thus be unnecessary to certify the counting systems and/or to re-certify the on-board safety-critical systems of the vehicle.

Further advantageous features of the present invention are set out in the appended claims.

These features as well as further advantages of the present invention will become more apparent in the light of the following description of a preferred embodiment thereof as shown in the annexed drawings, which are provided herein merely by way of non-limiting example, wherein:
- Fig. 1 shows a block diagram representing a device for detecting passengers getting on and/or getting off a means of transportation according to the invention;
- Fig. 2 shows a flow chart representing a method for detecting passengers getting on and/or getting off a means of transportation according to the invention;
- Fig. 3 shows a system comprising a plurality of devices according to the invention.

In this description, any reference to "an embodiment" will indicate that a particular configuration, structure or feature is comprised in at least one embodiment of the invention. Therefore, expressions such as "in an embodiment" and the like, which may be found in different parts of this description, will not necessarily refer to the same embodiment. Moreover, any particular configuration, structure or feature may be combined as deemed appropriate in one or more embodiments. The references below are therefore used only for simplicity's sake, and shall not limit the protection scope or extension of the various embodiments.

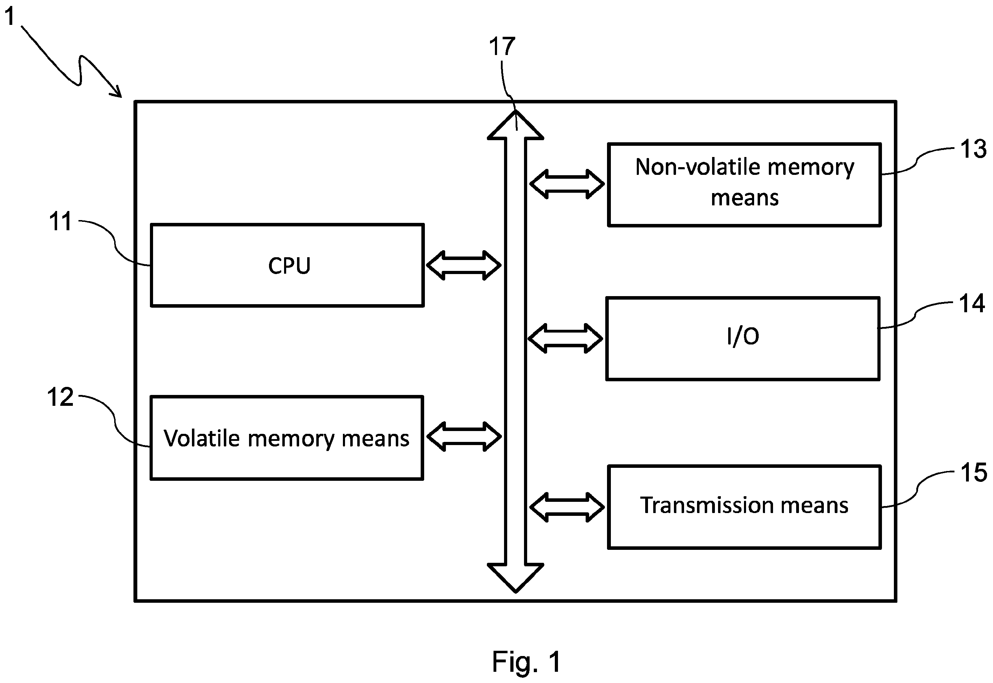

Also with reference to Fig. 1, the following will describe a device for detecting passengers getting on and/or getting off a means of transportation according to the invention, wherein said means of transportation is, preferably, a public means of transportation (e.g. a railway carriage, a tram car, a bus, or the like); said device 1 preferably comprises the following components:
- processing means 11, e.g. one or more CPUs, GPUs, FGPAs and/or the like, preferably implementing, via software and/or hardware means, a state classifier trained by inputting thereto one or more training images depicting one or more doors of the means of transportation which are either in an open state or in a closed state, and forcing the output of a datum defining the actual state of the door represented in the training images;
- volatile memory means 12, e.g. a random access memory RAM, in signal communication with the processing means 11. When the device 1 is in an operating condition, said volatile memory means 12 store at least one image comprising at least one portion depicting at least one portion of a door of said means of transportation;
- non-volatile memory means 13, preferably one or more magnetic disks (hard disks) or a Flash memory or another type of memory, in signal communication with the processing means 11 and with the volatile memory means 12, and wherein said non-volatile memory means 13 contain at least one set of instructions implementing a method for detecting passengers getting on and/or getting off said means of transportation according to the invention. Moreover, said non-volatile memory means 13 may also contain information that makes it possible to configure and/or operate the classifier (e.g. metadata, values representing weights used by the classifier to detect the state of a door, or the like);
- input and/or output (I/O) means 14 which can be connected to acquisition means (e.g. CMOS or CCD image sensor, or the like) and to detection means (e.g. people counter sensors, or the like), and which are configured to acquire said at least one image comprising at least one portion depicting at least one portion of said door. Such input/output means 14 may comprise, for example, a USB^{™}, IEEE 1394, RS232, RS485, IEEE 1284 adapter, or the like;
- transmission means 15, preferably wired and/or wireless ones (e.g. a network interface such as 803.2 (also known as Ethernet) or 802.11 (also known as WiFi^{™}) or 802.16 (also known as WiMax^{™}) or a data network interface such as GSM/GPRS/UMTS/LTE/5G, TETRA^{™}, LoRa^{™}, XBee^{™}, ZigBee^{™} or the like), configured for transmitting a signal in which said at least one monitoring datum is encoded to a supervision computer, which will be further described below;
- a communication bus 17 allowing information to be exchanged among the processing means 11, the volatile memory means 12, the non-volatile memory means 13, the input/output means 14, and the transmission means 15.

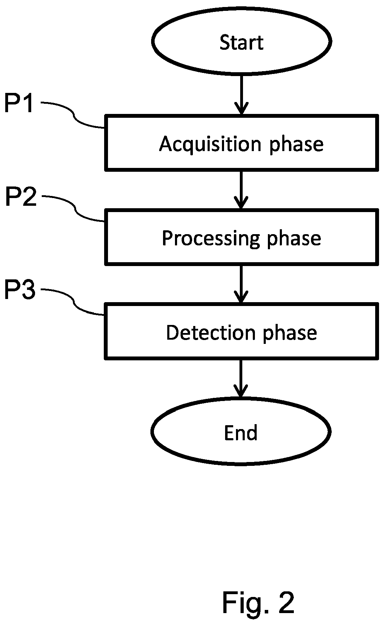

Also with reference to Fig. 2, when the device 1 is in an operating condition, said device 1 executes a set of instructions implementing the method according to the invention, which comprises the following phases:
- an acquisition phase P1, wherein at least one image is acquired, via the input means 14, which comprises at least one portion depicting at least one portion of a door of said means of transportation;
- a processing phase P2, wherein it is determined, via processing means 11, whether said door is in a closed state or in an open state on the basis of said at least one image;
- a detection phase P3, wherein at least one passenger getting on or getting off said means of transportation is detected, via said input means 14, when said door is in the open state, e.g. by activating a counting system for detecting passengers getting on and/or getting off the means of transportation and/or by acquiring signals generated by said counting system.

In this manner, passengers can be effectively counted without the counting systems having to be connected to the safety-critical systems of the means of transportation, such as, for example, railway carriages, tram cars, buses, or the like. Furthermore, many false detections of passengers getting on and/or off will be avoided, since detection will only occur when the doors are open, i.e. when passengers can actually get on/off. It will thus be unnecessary to certify the counting systems and/or to re-certify the on-board safety-critical systems of the vehicle.

It must be pointed out that the phases P1, P2 and P3 of the method according to the invention may also be executed in distinct apparatuses (e.g. each one of the phases P1-P3 may be executed by a single apparatus capable of communicating through a communication network), without however departing from the teachings of the present invention.

It must also be pointed out that the acquisition means and/or the detection means may either be included in the device 1 according to the invention or be provided as separate devices, without however departing from the teachings of the present invention.

The image classifier, e.g. a Support Vector Machine (SVM), a Convolutional Neural Network (CNN), or a Fully Connected Deep Neural Network (FC DNN), is inputted a number of points (pixels) that compose the image portion depicting the portion of the door of the means of transportation whose open or closed state must be detected.

According to the invention, the process preferably comprises also a training phase, wherein, prior to executing the processing phase P2, said classifier is trained by inputting thereto several training images, so that the algorithm can discriminate the desired state, in accordance with the images received during the training phase. In more detail, said training phase is preferably, but not necessarily, carried out by using a workstation comprising a CPU having higher computational power than the processing means 11, wherein said CPU is preferably configured to execute a set of instructions implementing a training algorithm.

In more detail, the method according to the invention preferably comprises also a training phase, wherein, prior to executing the processing phase P2, said neural network is trained in a manner such that, when said neural network is inputted said at least one training image, it will output the desired (second) state datum. This will allow the device 1 to be flexibly adapted in the course of its service life, e.g. should it be moved from one carriage to another, so that the image will show the door of the means of transportation from a different perspective.

In this manner, passengers can be effectively counted without the device 1 having to be connected to the safety-critical systems of the means of transportation. It will thus be unnecessary to certify the counting systems and/or to re-certify the on-board safety-critical systems of the vehicle.

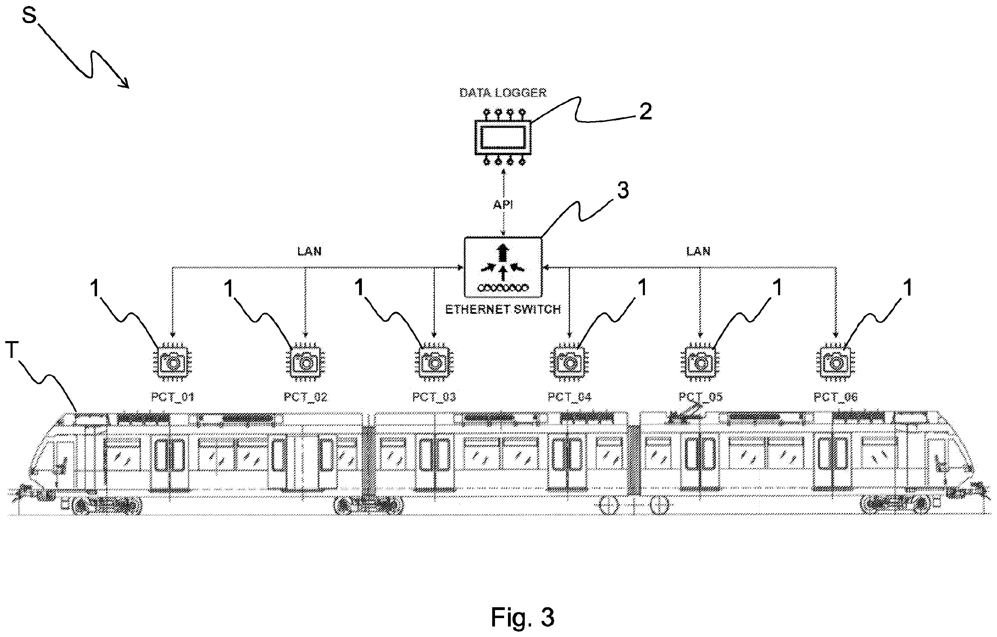

With reference to Fig. 3, the following will describe a system S for detecting passengers getting on and/or getting off a means of transportation, e.g. a train T.

The system S comprises the following elements:
- a plurality of devices 1 according to the invention, each one positioned in proximity to at least one of the doors of the means of transportation;
- a supervision unit 2 (e.g. a server, an industrial PC, or the like) configured to receive, from said devices 1, data about the open or closed state of doors D comprised in the means of transportation T;
- at least one network device (e.g. an Ethernet switch, a router, or the like) allowing the device 1 and the supervision unit 2 to communicate with each other.

As aforementioned, the device 1 preferably comprises the acquisition means, and said device 1 has such a shape that it can be positioned above a door of said means of transportation.

This permits the acquisition means to acquire an image that represents, advantageously, the door throughout its length, and preferably also the striker thereof, so as to ensure a correct detection of the open or closed state of the door; in particular, it will advantageously be possible to detect if the door is not perfectly closed (e.g. because it has tilted due to a broken or loose component, such as a screw, a nut, etc.), thus reducing the probability that a false closed state or a false open state might be detected.

In this manner, passengers can be effectively counted without the device 1 having to be connected to the safety-critical systems of the means of transportation. It will thus be unnecessary to certify the counting systems and/or to re-certify the on-board safety-critical systems of the vehicle.

In more detail, said device 1 has such a shape that it can be arranged in a housing of a lamp, preferably a lamp adapted to illuminate the passageway while passengers are getting on/off.

In this way, the device 1 can advantageously be installed on a means of transportation T that was not originally prearranged for said device 1, so that passengers can be effectively counted without the device 1 having to be connected to the safety-critical systems of the means of transportation, thus avoiding the need for certifying the counting systems.

In combination with the above, the acquisition means preferably comprise a wide-angle lens.

This type of lens, along with the fact that the device 1 is positioned above the door, will permit the acquisition means to acquire an image framing a larger portion of said door, thus further reducing the probability of detecting a false closed state or a false open state, and effectively counting the passengers without the device 1 having to be connected to the safety-critical systems of the means of transportation. It will thus be unnecessary to certify the counting systems and/or to re-certify the on-board safety-critical systems of the vehicle.

Preferably, the supervision unit 2 is also configured to acquire the passage of at least one passenger getting on or getting off the means of transportation through a specific door of the means of transportation T, which passage is detected by the detection means when the device 1, which monitors said door, detects that said door is in the open state. This will allow the supervision unit 2 to determine a total number of people aboard the means of transportation T whereon it has been installed, and optionally to know how many people are present in a particular section of said means of transportation T, e.g. in a particular carriage and/or carriage class, so as to be able to prevent passengers from crowding and/or to detect the presence of any ticketless passengers by comparing booking data with the total number of people determined by the supervision unit 2.

In order to detects such passage, the system S may comprise detection means capable of detecting the passage of one or more persons, e.g. a strain gauge, a capacitive sensor, a radar sensor or the like, preferably positioned near said door or at a point that a user must necessarily cross when getting on or getting off the means of transportation through said door.

As an alternative or in combination with the above, the device 1 preferably comprises said detection means, e.g. an FPGA or the like, configured to detect (during the detection phase P3) the passage of at least one passenger on the basis of said at least one image acquired by the acquisition means. It must be pointed out that the detection means may be included in, or coincide with, said processing means 11.

This further facilitates the installation of the device 1 on a means of transportation not originally prearranged for said device 1, so that effective counting of passengers can be attained without having also to install (dedicated) sensors capable of detecting the passage of people, and without having to connect the devices 1 to the safety-critical systems of the means of transportation. It will thus be unnecessary to certify the counting systems and/or to re-certify the on-board safety-critical systems of the vehicle.

It should be highlighted that the combined use of this feature and of the wide-angle lens is particularly advantageous because the image acquired by the acquisition means will also show, in addition to the door and the striker thereof, one or more passengers who are about to get on/off the means of transportation T, thus permitting the detection of at least one passenger getting on/off said means of transportation; the wide-angle lens, in fact, will keep a passenger within the image for a longer time, thereby increasing the probability that said at least one passenger will be detected.

In addition to the above, the detection means may also be configured to detect (during the detection phase P3) a direction of movement of said at least one passenger on the basis of said at least one image acquired by the acquisition means, i.e. to detect whether said at least one passenger is getting on or getting off said means of transportation (T) (i.e. whether the detected passenger is entering or exiting said means of transportation).

In addition to facilitating the installation of the device 1 on a means of transportation, this also results in the passengers being counted more effectively and in a simpler manner, without requiring the installation of two or more (dedicated) sensors capable of detecting the passage of people, and without having to connect the devices 1 to the safety-critical systems of the means of transportation. It will thus be unnecessary to certify the counting systems and/or to re-certify the on-board safety-critical systems of the vehicle.

Of course, the example described so far may be subject to many variations.

Some of the possible variants of the invention have been described above, but it will be clear to those skilled in the art that other embodiments may also be implemented in practice, without departing from the basic inventive idea, as specified in the following claims.

## Claims

1. Method for detecting passengers getting on and/or getting off a means of transportation (T), comprising
- an acquisition phase (P1), wherein at least one image is acquired, via input means (14), which comprises at least one portion depicting at least one portion of a door of said means of transportation (T),
- a processing phase (P2), wherein it is determined, via processing means (11), whether said door is in a closed state or in an open state on the basis of said at least one image,
- a detection phase (P3), wherein at least one passenger getting on or getting off said means of transportation (T) is detected, via said input means (14), when said door is in the open state,
**characterized in that**
during said processing phase (P2), determining by the processing means whether said door is in an incomplete closure state on the basis of said at least one image.

2. Method according to claim 1, wherein, during the detection phase (P3), the passage of said at least one passenger is detected on the basis of said at least one image acquired during the acquisition phase (P1).

3. Method according to claim 2, wherein, during the detection phase (P3), a direction of movement of said at least one passenger is also detected on the basis of said at least one image acquired during the acquisition phase (P1).

4. Device (1) for detecting passengers getting on and/or getting off a means of transportation (T), comprising
- acquisition means for acquiring at least one image comprising at least one portion depicting at least one portion of a door of said means of transportation (T),
- input means (14) that are connected to said acquisition means, and can be connected to
• detection means for detecting passengers getting on and/or getting off said means of transportation (T),
- processing means (11) configured for
• acquiring, via the input means (14), said at least one image,
• determining whether said door is in a closed state or in an open state on the basis of said at least one image, and
• detecting, via the input means (14), at least one passenger getting on or getting off said means of transportation (T) when said door is in the open state,
wherein said device (1) has such a shape that it can be positioned above a door of said means of transportation (T),
**characterized in that**
the processing means (11) are further configured for determining whether said door is in an incomplete closure state on the basis of said at least one image.

5. Device (1) according to claim 4, wherein said device (1) has such a shape that it can be located in a housing of a lamp.

6. Device (1) according to any one of claims 4 to 5, wherein the acquisition means comprise a wide-angle lens.

7. Device (1) according to any one of claims 4 to 6, comprising said detection means, which are configured for detecting, on the basis of said at least one image acquired by the acquisition means, said at least one passenger getting on or getting off said means of transportation (T).

8. Device (1) according to claim 7, wherein the detection means are also configured for sensing whether said at least one passenger detected is getting on or off said means of transportation (T).

9. Computer program product which can be loaded into the memory of an electronic computer, and which comprises portions of software code that when executed by the computer associated with the device of claim 4, causes the device to carry out the steps of the method according to any one of claims 1 to 3.

## Patentansprüche

1. Verfahren zur Erkennung des Einsteigens und/oder Aussteigens von Fahrgästen in ein bzw. aus einem Verkehrsmittel (T), umfassend
- eine Erfassungsphase (P1), in der über Eingabemittel (14) mindestens ein Bild erfasst wird, das mindestens einen Abschnitt umfasst, der mindestens einen Abschnitt einer Tür des Verkehrsmittels (T) darstellt,
- eine Verarbeitungsphase (P2), in der über Verarbeitungsmittel (11) basierend auf dem mindestens einen Bild bestimmt wird, ob die Tür in einem geschlossenen Zustand oder in einem geöffneten Zustand ist,
- eine Erkennungsphase (P3), in der über die Eingabemittel (14) erkannt wird, dass mindestens ein Fahrgast in das Verkehrsmittel (T) einsteigt oder daraus aussteigt, wenn die Tür in dem geöffneten Zustand ist,
**dadurch gekennzeichnet, dass**
während der Verarbeitungsphase (P2) durch das Verarbeitungsmittel basierend auf dem mindestens einen Bild bestimmt wird, ob die Tür in einem unvollständig geschlossenen Zustand ist.

2. Verfahren nach Anspruch 1, wobei während der Erkennungsphase (P3) der Ein-/Ausstieg des mindestens einen Fahrgasts basierend auf dem mindestens einen Bild erkannt wird, das während der Erfassungsphase (P1) erfasst wird.

3. Verfahren nach Anspruch 2, wobei während der Erkennungsphase (P3) auch eine Bewegungsrichtung des mindestens einen Fahrgasts basierend auf dem mindestens einen Bild erkannt wird, das während der Erfassungsphase (P1) erfasst wird.

4. Vorrichtung (1) zum Erkennen des Einsteigens und/oder Aussteigens von Fahrgästen in ein bzw. aus einem Verkehrsmittel (T), umfassend
- Erfassungsmittel zum Erfassen mindestens eines Bildes, das mindestens einen Abschnitt umfasst, der mindestens einen Abschnitt einer Tür des Verkehrsmittels (T) darstellt,
- Eingabemittel (14), die mit den Erfassungsmitteln verbunden sind und verbunden werden können mit
• Erkennungsmitteln zum Erkennen des Einsteigens und/oder Aussteigens von Fahrgästen in ein bzw. aus einem Verkehrsmittel (T),
- Verarbeitungsmittel (11), die zu Folgendem konfiguriert sind:
• Erfassen des mindestens einen Bildes über die Eingabemittel (14),
• Bestimmen, ob die Tür in einem geschlossenen Zustand oder in einem geöffneten Zustand ist, basierend auf dem mindestens einen Bild und
• Erkennen über die Eingabemittel (14), dass mindestens ein Fahrgast in das Verkehrsmittel (T) einsteigt oder daraus aussteigt, wenn die Tür in dem geöffneten Zustand ist,
wobei die Vorrichtung (1) solch eine Form aufweist, dass sie über einer Tür des Verkehrsmittels (T) positioniert werden kann, **dadurch gekennzeichnet, dass**
die Verarbeitungsmittel (11) ferner dazu konfiguriert sind, basierend auf dem mindestens einen Bild zu bestimmen, ob die Tür in einem unvollständig geschlossenen Zustand ist.

5. Vorrichtung (1) nach Anspruch 4, wobei die Vorrichtung (1) solch eine Form aufweist, dass sie in einem Gehäuse einer Lampe angeordnet werden kann.

6. Vorrichtung (1) nach einem der Ansprüche 4 bis 5, wobei die Erfassungsmittel eine Weitwinkellinse umfassen.

7. Vorrichtung (1) nach einem der Ansprüche 4 bis 6, umfassend die Erkennungsmittel, die dazu konfiguriert sind, basierend auf dem mindestens einen Bild, das von den Erfassungsmitteln erfasst wird, zu erkennen, dass der mindestens eine Fahrgast in das Verkehrsmittel (T) einsteigt oder daraus aussteigt.

8. Vorrichtung (1) nach Anspruch 7, wobei die Erkennungsmittel außerdem dazu konfiguriert sind, abzufragen, ob erkannt wird, dass der mindestens eine Passagier in das Verkehrsmittel (T) einsteigt oder daraus aussteigt.

9. Computerprogrammprodukt, das in den Speicher eines elektronischen Computers geladen werden kann und das Abschnitte von Softwarecode umfasst, der bei Ausführung durch den Computer, der mit der Vorrichtung nach Anspruch 4 assoziiert ist, die Vorrichtung zum Ausführen der Schritte des Verfahrens nach einem der Ansprüche 1 bis 3 veranlasst.

## Revendications

1. Procédé de détection de passagers montant et/ou descendant d'un moyen de transport (T), comprenant :
- une phase d'acquisition (P1), dans laquelle au moins une image est acquise, par l'intermédiaire de moyens d'entrée (14), laquelle comprend au moins une partie représentant au moins une partie d'une porte dudit moyen de transport (T),
- une phase de traitement (P2), dans laquelle il est déterminé, par l'intermédiaire de moyens de traitement (11), si ladite porte est dans un état fermé ou dans un état ouvert sur la base de ladite au moins une image,
- une phase de détection (P3), dans laquelle au moins un passager montant ou descendant dudit moyen de transport (T) est détecté, par l'intermédiaire desdits moyens d'entrée (14), lorsque ladite porte est dans l'état ouvert,
**caractérisé en ce que**
pendant ladite phase de traitement (P2), il est déterminé par les moyens de traitement si ladite porte est dans un état de fermeture incomplète sur la base de ladite au moins une image.

2. Procédé selon la revendication 1, dans lequel, pendant la phase de détection (P3), le passage dudit au moins un passager est détecté sur la base de ladite au moins une image acquise pendant la phase d'acquisition (P1).

3. Procédé selon la revendication 2, dans lequel, pendant la phase de détection (P3), une direction de mouvement dudit au moins un passager est également détectée sur la base de ladite au moins une image acquise pendant la phase d'acquisition (P1) .

4. Dispositif (1) pour détecter des passagers montant et/ou descendant d'un moyen de transport (T), comprenant :
- des moyens d'acquisition pour acquérir au moins une image comprenant au moins une partie représentant au moins une partie d'une porte dudit moyen de transport (T),
- des moyens d'entrée (14) qui sont connectés auxdits moyens d'acquisition, et peuvent être connectés à
• des moyens de détection pour détecter des passagers montant et/ou descendant dudit moyen de transport (T),
- des moyens de traitement (11) configurés pour :
• acquérir, par l'intermédiaire des moyens d'entrée (14), ladite au moins une image,
• déterminer si ladite porte est dans un état fermé ou dans un état ouvert sur la base de ladite au moins une image, et
• détecter, par l'intermédiaire des moyens d'entrée (14), au moins un passager montant ou descendant dudit moyen de transport (T) lorsque ladite porte est dans l'état ouvert,
dans lequel ledit dispositif (1) présente une forme telle qu'il peut être positionné au-dessus d'une porte dudit moyen de transport (T),
**caractérisé en ce que**
les moyens de traitement (11) sont en outre configurés pour déterminer si ladite porte est dans un état de fermeture incomplète sur la base de ladite au moins une image.

5. Dispositif (1) selon la revendication 4, dans lequel ledit dispositif (1) présente une forme telle qu'il peut être logé dans un boîtier d'une lampe.

6. Dispositif (1) selon l'une quelconque des revendications 4 à 5, dans lequel les moyens d'acquisition comprennent un objectif grand-angle.

7. Dispositif (1) selon l'une quelconque des revendications 4 à 6, comprenant lesdits moyens de détection, lesquels sont configurés pour détecter, sur la base de ladite au moins une image acquise par les moyens d'acquisition, ledit au moins un passager montant ou descendant dudit moyen de transport (T).

8. Dispositif (1) selon la revendication 7, dans lequel les moyens de détection sont également configurés pour détecter si ledit au moins un passager détecté monte ou descend dudit moyen de transport (T).

9. Produit programme d'ordinateur qui peut être chargé dans la mémoire d'un ordinateur électronique, et qui comprend des parties de code de logiciel qui, lorsqu'elles sont exécutées par l'ordinateur associé au dispositif de la revendication 4, amènent le dispositif à exécuter les étapes du procédé selon l'une quelconque des revendications 1 à 3.
